# EUROPEAN PATENT APPLICATION

(11) **EP 0 880 273 A2**
(43) Date of publication of application: **25.11.1998**
(21) Application number: 98109108.5
(22) Date of filing: 19.05.1998
(51) Int. Cl.: H04N 1/32

(54) **Facsimile apparatus**

(30) Priority: 21.05.1997 JP 131049/97
(71) Applicant: Murata Kikai Kabushiki Kaisha, Minami-ku, Kyoto-shi, Kyoto (JP)
(72) Inventor: Kuwahara, Tetsuya, Kyoto-shi, Kyoto (JP)
(74) Representative: Liedl, Christine, Dipl.-Chem.

(57) **Abstract**

A facsimile machine (F) on a called side including a memory (6) for storing a plurality of image data for selective polling and predetermined information associated with the plurality of image data respectively such as selective polling IDs and passwords. The facsimile machine (F) identifies one of the plurality of image data, which a calling facsimile machine wants to retrieve, from SEP and PWD signals sent from the calling facsimile machine by referring to the predetermined information stored in the memory (6). The facsimile machine (F) transmits the identified one of the image data to the calling facsimile machine if it identifies the desired image data. If the facsimile machine (F) finds certain data in SEP and PWD signals such as asterisks instead of ID and password, it transmits all of caption information about the image data available on the called side to the calling facsimile machine.

## Description

The present invention generally relates to a facsimile apparatus and more particularly to a facsimile apparatus which can utilize signals such as selective polling signal and password signal in normal procedures.

Facsimile communications procedures are defined in ITU-T Recommendations, T.30. By performing facsimile communications according to this Recommendation, it is possible to exchange data between facsimile apparatus manufactured by different companies or between different types of facsimile apparatus . This Recommendation is revised in view of development of technology and styles of communications. Recent Recommendation includes, for instance, definition of SEP (Selective Polling) signal and PWD (Password) signal.

The selective polling will first be described.

Image data, selective polling ID, password etc. are stored in each of a plurality of memory boxes of a facsimile apparatus on the called side beforehand. A remote facsimile apparatus on the calling side transmits a selective polling ID and a password of a desired memory box. The facsimile apparatus on the called side searches a memory box which includes the selective polling ID and password specified by the remote facsimile apparatus. If the facsimile apparatus on the called side locates such a memory box, it sends the image data to the remote facsimile apparatus from the memory box. In this manner, the remote facsimile apparatus can retrieve the image data from a memory of the facsimile apparatus by polling.

SEP and PWD signals defined by ITU-T Recommendation are used for the remote facsimile apparatus to specify particular image data among a plurality of image data prepared on the called side, which image data is data the remote facsimile apparatus wants to retrieve by polling. The remote facsimile apparatus needs to know beforehand what image data the facsimile apparatus on the called side possesses and what data the SEP and PWD signals should be accompanied with in order to retrieve desired image data by polling.

An object of the present invention is to provide a facsimile apparatus on a called side which can inform a calling facsimile apparatus of necessary information about polling communications if the calling facsimile apparatus does not know beforehand what image data the facsimile apparatus on the called side possesses and what data the SEP and PWD signals to be sent from the calling facsimile apparatus should carry in order to retrieve desired image data by selective polling.

Another object of the present invention is to provide a method of controlling (or operating) a facsimile apparatus on the called side to provide the calling facsimile apparatus with necessary information for selective polling when desired.

Still another object of the invention is to provide a computer usable or readable medium which stores a program which the facsimile apparatus on the called side executes.

The term "computer usable or readable medium" in this specification including the claims covers any physical object in which the program to be executed by CPU or the like is stored. For example, the "computer usable medium" may include a floppy disk, CD-ROM, hard disk drive, ROM, RAM, optical recording medium such as DVD, photomagnetic recording medium such as MO, magnetic recording medium such as magnetic tape, and semiconductor memory such as IC card and miniature card.

The term "module" in this specification including the claims may be a hardware module consisting of single or plural circuits, a software module to be executed by CPU or the like, or combination thereof.

According to one embodiment of the present invention, there is provided a facsimile apparatus comprising: storage means for storing a plurality of image data for selective polling, predetermined information associated with the plurality of image data respectively and caption information associated with the plurality of image data respectively; means for identifying desired one of the plurality of image data from a signal or signals sent from a calling facsimile apparatus and the predetermined information; means for determining whether or not the signal or signals sent from the calling facsimile apparatus include prescribed data; and control means for transmitting the identified one of the image data to the calling facsimile apparatus from the storage means if the identification means identifies the desired image data and for transmitting all of the caption information to the calling facsimile apparatus from the storage means if the determination means finds the prescribed data.

If the signals such as SEP and PWD signals sent from the calling facsimile apparatus carry an appropriate selective polling ID and password, the called facsimile apparatus can identify a particular memory box with the designated selective polling ID and password. Then, the called facsimile apparatus sends the image data from the designated memory box to the calling facsimile apparatus. If an operator of the calling facsimile apparatus does not know any selective polling IDs and passwords, he or she enters particular data such as asterisk in the SEP and PWD signals. Upon finding the asterisks in the SEP and PWD signals, the called facsimile apparatus returns the caption information about the image data available on the called side. Therefore, the operator of the calling facsimile apparatus is able to know what image data is available for polling communications.

In addition to the information about the captions of the image data stored on the called side , selective polling IDs and passwords associated with the plurality of image data may also be transmitted to the calling facsimile apparatus.

According to another embodiment of the present invention, there is provided a facsimile apparatus comprising: storage means for storing a plurality of image data for selective polling and predetermined information associated with the plurality of image data respectively; means for identifying desired one of the plurality of image data from a signal or signals sent from a calling facsimile apparatus and the predetermined information; means for determining whether or not the signal or signals sent from the calling facsimile apparatus include certain data; and control means for transmitting the identified one of the image data to the calling facsimile apparatus from the storage means if the identification means identifies the desired image data and for transmitting part of each image data from the storage means to the calling facsimile apparatus if the determination means finds the certain data.

If an operator of the calling facsimile apparatus does not know any selective polling IDs and passwords, he or she enters particular data such as asterisk in the signals such as SEP and PWD signals to be sent to the called facsimile apparatus. Upon finding the asterisks in the SEP and PWD signals, the called facsimile apparatus returns part of each image data available on the called side. The part of image data may first several lines of first page of image. It may also include caption information about the image data. The operator of the calling facsimile apparatus can therefore know what image data are available.
- Figure 1: illustrates a block diagram of a facsimile machine according to the present invention;
- Figure 2: illustrates contents of an electronic telephone directory stored in the facsimile machine shown in Figure 1;
- Figure 3: illustrates contents of a management area in an image memory of the facsimile machine shown in Figure 1;
- Figure 4: illustrates a flowchart of operations executed by the facsimile machine of the invention when used as a called facsimile machine;
- Figure 5: illustrates a flowchart of operations executed by the facsimile machine of the invention when used as a calling facsimile machine; and
- Figure 6: illustrates operations for polling communications between the two facsimile machines.

A facsimile device according to the present invention will be described with reference to the accompanying drawings.

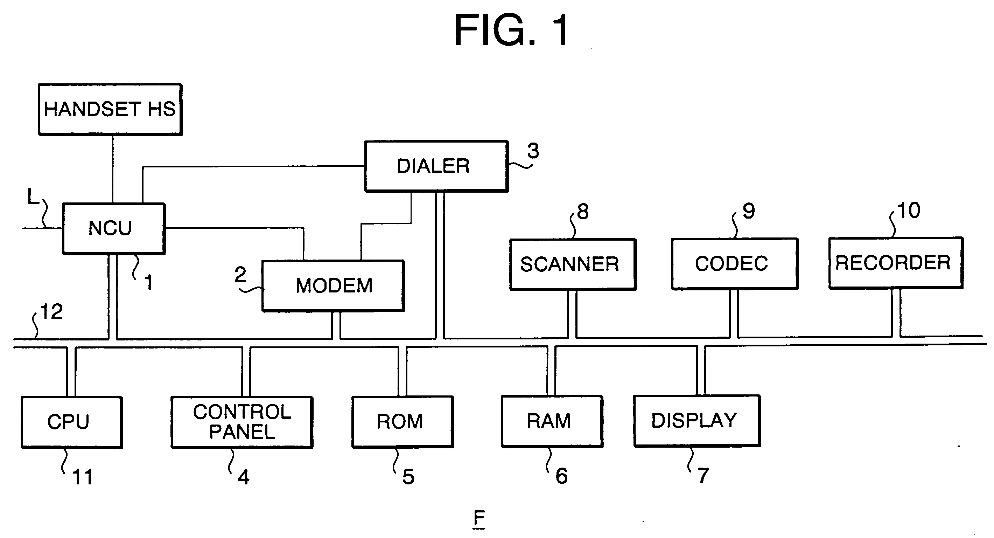

Referring to Figure 1, a facsimile apparatus F of the invention includes a network controlling unit (NCU) 1 which detects a calling signal coming from a telephone line L and informs CPU 11 of arrival of calling signal. NCU 1 also performs connection and disconnection of the facsimile apparatus F to and from the telephone line L based on a command from CPU 11. A handset HS is connected to the NCU 1 so that a user of the facsimile apparatus F can talk to someone over the telephone line L. CPU 11 controls components of the facsimile apparatus F connected thereto by a bus 12 based on a program stored in ROM 5.

The facsimile apparatus F also includes a modem 2 which converts an analog signal to a digital signal upon receiving the analog signal from the telephone line L, and which converts a digital signal to an analog signal and outputs it to the telephone line L. A dialer 3 is connected to NCU 1 and the modem 2, and controls transmission of dial pulse or DTMF signal to the telephone line L when the facsimile machine F calls a remote facsimile machine (not shown).

The facsimile apparatus F includes a control panel 4 which is equipped with numeric keys to input a telephone or facsimile number of a remote facsimile machine and various function keys to perform selective polling and to store image data in memory boxes for selective polling. The control panel 4 also includes speed dialing keys, one touch dialing keys and communications keys. ROM 5 stores programs needed to control the facsimile apparatus F, data, character patterns (fonts) etc. RAM 6 includes an image memory, a management area for the image memory, and an electronic telephone directory. The image memory stores image data for polling, which image data may be coded by a MH coding system, MR coding system or the like. The electronic telephone directory stores data of speed dialing numbers and the like.

The facsimile apparatus F has a display 7 such as LCD which indicates an operating condition of the facsimile apparatus F, a function or operation mode specified by a user, a facsimile number input by a user or the like. A scanner 8 of the facsimile apparatus F includes an image sensor such as CCD to scan an original document or image and output a binary image signal. A codec 9 codes/decodes the binary image data by the MH or MR system. A printer 10 of the facsimile apparatus F prints an image on a recording sheet by thermal printing or electrophotographic printing, which image is received from the telephone line L or stored in RAM 6.

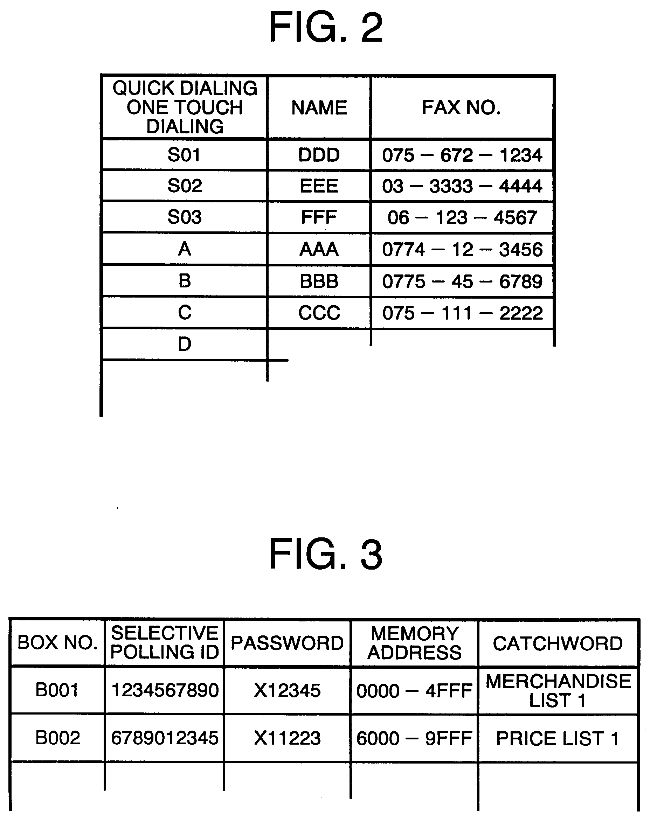

Referring now to Figure 2, the electronic telephone directory stored in RAM 6 will be described.

The electronic telephone directory is used when calling someone or a remote facsimile machine. The left column of the electronic telephone directory stores speed dialing numbers (indicated by combination of alphabets and numerals such as S01, S02 and S03) and one touch dialing numbers (indicated by alphabets such as A, B and C) . The intermediate column stores names of called party and the right column stores their facsimile numbers.

Referring to Figure 3, RAM 6 also has the management area for managing or controlling the image memory. The image memory is managed box by box so that the management area includes the column for box numbers (left column), that for selective polling IDs, that for passwords, that for memory addresses and that for headings, captions or catchwords (right column). The memory address column indicates an address in the memory at which the image data is actually stored. The rightmost column indicates the captions or catchwords of the image data. These memory boxes are prepared before the selective polling is carried out, and the image data for polling and the catchwords are registered. The catchwords briefly indicate contents of the image data (e.g., title) and are stored in the form of code data of about 10 to 30 characters.

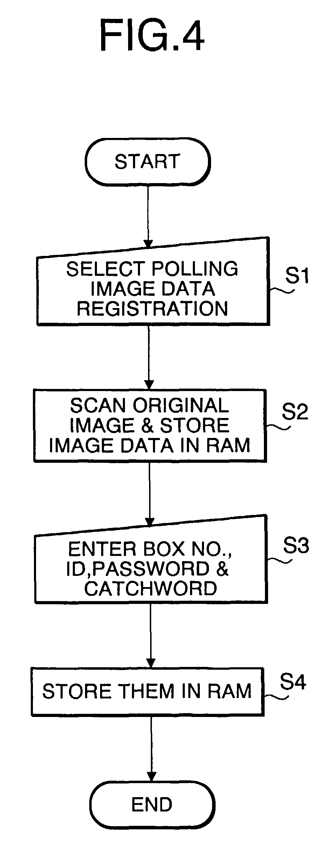

Next, the selective polling will be described when the facsimile machines F of the invention are used both on the calling and called sides. First, registration or storage of image data for polling on the called side will be described with reference to Figure 4. When an operator presses particular function keys on the control panel 4 to select a mode for registration of polling image data (S1), the scanner 8 of the facsimile machine F scans an original document or image and the image is stored in RAM 6 in the form of image data (S2). The operator then inputs a box name, a selective polling ID, a password and a caption or catch-word (S3), all of which are stored in RAM 6 (S4).

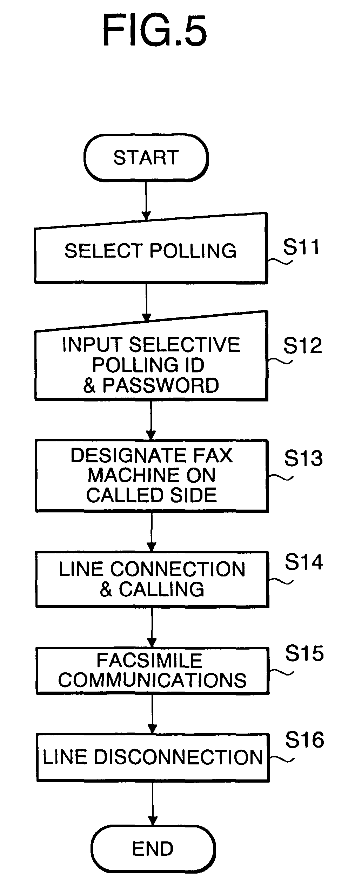

Figure 5 illustrates an operation of the facsimile machine F on the calling side. When an operator wants to retrieve data from the called facsimile machine by selective polling, he or she selects a selective polling mode by operating the control panel 4 (S11). The operator then inputs a polling ID and a password of image data which he or she wants to receive (retrieve) by polling (S12). The polling IDs and passwords are already assigned to the respective image data (or memory boxes) on the called side. If the operator does not know the polling ID and password, he or she enters asterisks (*) in the polling ID area and the password area in the display 7.

After that, the operator designates the facsimile machine on the called side by operating the control panel 4 (S13). Designation of the facsimile machine on the called side is performed by using the speed dialing keys, the one touch dialing key or the numeric keys (normal dialing).

The speed dialing keys are generally combination of two or three symbols or numbers which are assigned to a particular remote facsimile machine. If the operator presses the predetermined three symbols, for instance, and successively a communications start key, a facsimile number is automatically dialed and a call is made to a desired remote facsimile machine. The one touch dialing key is a single symbol or number which is assigned to a remote facsimile machine. Generally five to twenty keys on the control panel 4 can be used for the one touch dialing operation. By pressing a particular key, a facsimile number of a remote facsimile machine is automatically dialed and a call is made. The operator can also input a full facsimile number by simply pressing the numeric keys. A communications start key is pressed after inputting the whole facsimile number to make a call.

In this manner, line connection is established and a call is made (S14) , and then facsimile communications start (S15). The detail of the facsimile communications will be described later. Upon completion of facsimile communications, the line is disconnected (S16).

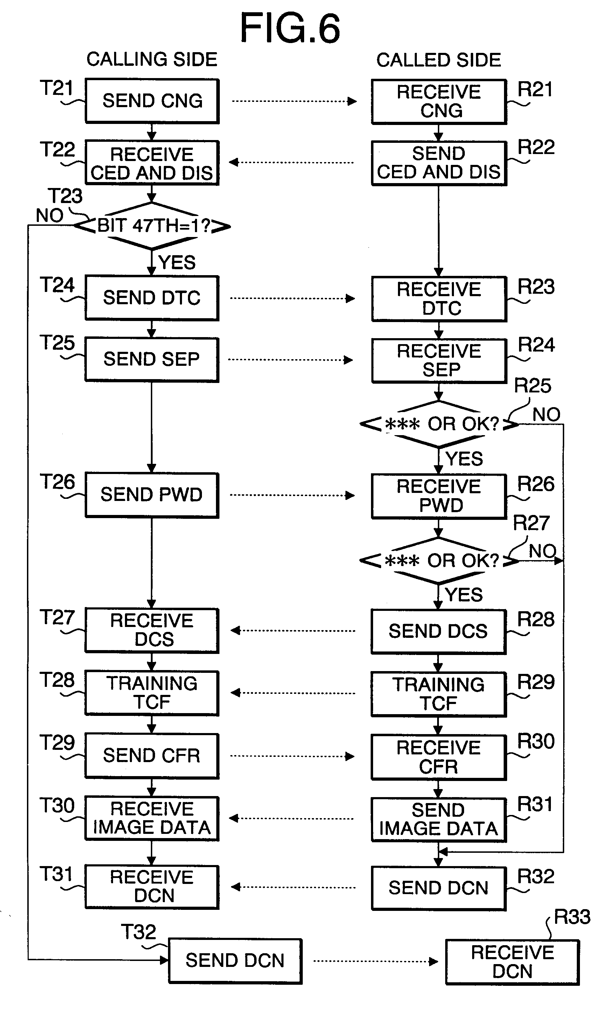

Referring to Figure 6, the selective polling will be described in detail. The calling facsimile machine transmits CNG signal after making a call (T21). The called facsimile machine receives a call and CNG signal (R21). Then, the called facsimile machine sends back CED and DIS signals (R22). The facsimile machine on the called side places "1" in the 47th bit of DIS signal in order to indicate that the selective polling is possible.

The calling facsimile machine receives CED and DIS signals (T22). If the calling facsimile machine finds "1" in the 47th hit of DIS signal, it recognizes that the selective polling is feasible between the called facsimile machine and itself. However, if the 47th bit of DIS signal is not "1" (T23), the calling facsimile machine terminates communications since the selective polling is not possible (T32 and R33).

After knowing the possibility of selective polling, the calling facsimile machine transmits DTC signal (T24) and subsequently SEP and PWD signals (T25 and T26). The selective polling ID and password included in SEP and PWD signals are those entered by the operator pressing the control panel 4. If the operator does not know the selective polling ID and password, the asterisks (*) are included in SEP and PWD signals.

The called facsimile machine receives DTC signal (R23) and SEP and PWD signals in turn (R24 and R26). Upon receiving SEP and PWD signals, the called facsimile machine determines whether the selective polling ID contained in SEP signal and the password contained in PWD signal are the asterisks or those stored in the management area of RAM 6 (i.e., whether the called facsimile machine has a memory box with the selective polling ID arid password designated by the calling facsimile machine) (R25 and R27). If the selective polling ID and password are neither the registered ones nor the asterisks, the communications are terminated (R32 and T31). If the selective polling ID and password sent from the calling facsimile machine are either the registered ones or the asterisks, the called facsimile machine sends DCS signal to maintain the communications (R28 and T27).

Then, training of the modem 2 is performed between the calling and called facsimile machines (R29, R30, T28 and T29). Upon completion of training, the called facsimile machine transmits image data. If the selective polling ID and password of the SEP and PWD signals are the asterisks, all of the captions of the image data stored in the management area are converted to image data and transmitted to the calling facsimile machine. If the called facsimile machine finds a memory box having the designated selective polling ID and password, the called facsimile machine sends the image data to the calling facsimile machine from the designated memory box (R31 and T30). Upon completion of image data transmission, the communications are terminated (R32 and T31).

As described above, the called facsimile machine has stored the selective polling IDs, the passwords and the image data in the memory boxes respectively for selective polling communications beforehand. The calling facsimile machine specifies the selective polling ID and password and sends them to the called facsimile machine in the form of SEP and PWD signals. In response to such SEP and PWD signals, the called facsimile machine sends the image data from a particular memory box having the designated polling ID and password. If the SEP and PWD signals only carry the asterisks in the place of the selective polling ID and password, the called facsimile machine transmits the captions or catchwords of all the memory boxes of the called facsimile machine instead of sending image data.

It should be noted that the present invention is not limited to the described and illustrated embodiment. Various changes and modifications may be made without departing from the spirit and scope of the invention.
(1) In the above described embodiment, the code data is stored in the caption column of Figure 3 and the code data is converted to image data before transmitted to the calling facsimile machine. Instead of the code data, part of the image data itself (e.g., upper several centimeters of the image on one page of original document) may be stored in the caption column of the memory. When a polling document is prepared, for instance, caption information may be written in an upper 3 cm area of the first page of document, and this caption information may be sent to the calling facsimile machine when required. Accordingly, it is not necessary to register the code data.
(2) In the illustrated embodiment, when the selective polling ID and password sent from the calling facsimile machine are the asterisks, the caption information is only returned to the calling facsimile machine. In addition to the caption information, the selective polling IDs and/or passwords may also be sent to the calling facsimile machine in the form of image data. The user of the calling facsimile machine can know the selective polling IDs and passwords together with the captions of the available image data so that he or she promptly retrieve desired image data by polling.
(3) In the embodiment, the user of the calling facsimile machine inputs the asterisks in SEP and PWD signals when he or she does not know the polling ID and password. Other symbols or characters may be employed instead of the asterisk. It is also arbitrary how many digits such symbols have.
(4) Teaching of the present invention may be applied to a facsimile system or facsimile server larger than the illustrated facsimile apparatus.

## Claims

1. A facsimile apparatus (F) comprising:
storage means (6) for storing a plurality of image data for selective polling, predetermined information associated with the plurality of image data respectively and caption information associated with the plurality of image data respectively;
means for identifying desired one of the plurality of image data from a signal or signals sent from a calling facsimile apparatus and the predetermined information;
means for determining whether or not the signal or signals sent from the calling facsimile apparatus include prescribed data; and
control means (11) for transmitting the identified one of the image data to the calling facsimile apparatus from the storage means (6) if the identification means identifies the desired image data and for transmitting all of the caption information to the calling facsimile apparatus from the storage means (6) if the determination means finds the prescribed data.

2. A facsimile apparatus (F) comprising:
storage means (6) for storing a plurality of image data for selective polling and predetermined information associated with the plurality of image data respectively;
means for identifying desired one of the plurality of image data from a signal or signals sent from a calling facsimile apparatus and the predetermined information;
means for determining whether or not the signal or signals sent from the calling facsimile apparatus include prescribed data; and
control means (11) for transmitting the identified one of the image data to the calling facsimile apparatus from the storage means (6) if the identification means identifies the desired image data and for transmitting part of each image data from the storage means (6) to the calling facsimile apparatus if the determination means finds the prescribed data.

3. The facsimile apparatus (F) of claim 1, characterized in that the caption information is code data, and the facsimile apparatus further includes character pattern generating means for converting the code data to image data.

4. The facsimile apparatus (F) of claim 1, 2 or 3, characterized in that the control means (11) further transmits the predetermined information associated with the plurality of image data to the calling facsimile apparatus from the storage means when the determination means finds the prescribed data.

5. The facsimile apparatus (F) of any one of foregoing claims, characterized in that the predetermined information associated with the plurality of image data includes selective polling IDs and/or passwords.

6. The facsimile apparatus (F) of any one of foregoing claims, characterized in that the prescribed data includes at least one asterisk.

7. The facsimile apparatus (F) of any one of foregoing claims, characterized in that the signal or signals sent from a calling facsimile machine include a SEP signal and/or a PWD signal.

8. A method of controlling a facsimile apparatus (F) comprising the steps of:
A) storing a plurality of image data for selective polling, predetermined information associated with the plurality of image data respectively and caption information associated with the plurality of image data respectively in a memory (6); and
B) transmitting one of the image data to the calling facsimile apparatus from the memory (6) if the one of the plurality of image data is identified from a signal or signals sent from a calling facsimile apparatus and the predetermined information and transmitting all of the caption information to the calling facsimile apparatus from the memory (6) if the signal or signals sent from the calling facsimile apparatus include prescribed data.

9. A method of controlling a facsimile apparatus (F) comprising the steps of:
A) storing a plurality of image data for selective polling and predetermined information associated with the plurality of image data respectively in a memory (6); and
B) transmitting one of the image data to the calling facsimile apparatus from the memory (6) if the one of the plurality of image data is identified from a signal or signals sent from a calling facsimile apparatus and the predetermined information and transmitting part of each image data from the memory (6) to the calling facsimile apparatus if a signal or signals sent from the calling facsimile apparatus include prescribed data.

10. The method of claim 8 or 9, characterized in that the step (B) includes further transmitting the predetermined information associated with the plurality of image data to the calling facsimile apparatus from the memory (6) when the signal or signals sent from the calling facsimile apparatus include prescribed data.

11. The method of claim 8, 9 or 10, characterized in that the predetermined information associated with the plurality of image data includes selective polling IDs and/or passwords.

12. The method of any one of claims 8 to 11, characterized in that the prescribed data includes at least one asterisk.

13. The method of any one of claims 8 to 12, characterized in that the signal or signals sent from a calling facsimile machine include a SEP signal and/or a PWD signal.

14. A computer usable medium for storing a program used for controlling a facsimile machine, comprising:
a first module (6) for storing a plurality of image data for selective polling, predetermined information associated with the plurality of image data respectively and caption information associated with the plurality of image data respectively; and
a second module for transmitting one of the image data to a calling facsimile machine from the first module (6) if the one of the plurality of image data is identified from a signal or signals sent from the calling facsimile machine and the predetermined information and for transmitting all of the caption information to the calling facsimile machine from the first module (6) if the signal or signals sent from the calling facsimile machine include prescribed data.

15. A computer usable medium for storing a program used for controlling a facsimile machine, comprising:
a first module (6) for storing a plurality of image data for selective polling and predetermined information associated with the plurality of image data respectively; and
a second module for transmitting one of the image data to a calling facsimile machine from the first module (6) if the one of the plurality of image data is identified from a signal or signals sent from the calling facsimile machine and the predetermined information and for transmitting part of each image data from the first module (6) to the calling facsimile machine if the signal or signals sent from the calling facsimile machine include prescribed data.

16. The computer usable medium of claim 14 or 15, characterized in that the second module further transmits the predetermined information associated with the plurality of image data to the calling facsimile machine from the first module (6) when the signal or signals sent from the calling facsimile machine include the prescribed data.

17. The computer usable medium of claim 14, 15 or 16, characterized in that the predetermined information associated with the plurality of image data includes selective polling IDs and/or passwords.

18. The computer usable medium of any one of claims 14 to 17, characterized in that the prescribed data includes at least one asterisk.

19. The computer usable medium of any one of claims 14 to 18, characterized in that the signal or signals sent from a calling facsimile machine include a SEP signal and/or a PWD signal.
